# EUROPEAN PATENT SPECIFICATION

(11) **EP 2 453 607 B1**
(45) Date of publication and mention of the grant of the patent: **04.01.2017**
(21) Application number: 10805961.9
(22) Date of filing: 20.04.2010
(51) Int. Cl.: H04L 12/721

(54) **METHOD AND DEVICE FOR CALCULATING K-SHORTEST PATHS**
VERFAHREN UND VORRICHTUNG ZUR BERECHNUNG K-KÜRZESTER PFADE
PROCÉDÉ ET DISPOSITIF DE CALCUL DE TRAJETS K LES PLUS COURTS

(30) Priority: 06.08.2009 CN 200910090368
(43) Date of publication of application: 16.05.2012
(73) Proprietor: ZTE Corporation, Shenzhen, Guangdong 518057 (CN)
(72) Inventor: ZHAO, Wei, Shenzhen Guangdong 518057 (CN)
(74) Representative: Wynne-Jones, Laine and James LLP
(86) International application number: PCT/CN2010/071944
(87) International publication number: WO 2011/015057

(56) References cited:
- WO-A1-2008/053465
- CN-A- 1 494 269
- CN-A- 1 592 159
- CN-A- 101 621 721
- US-A1- 2003 233 474
- US-B1- 6 928 484
- Hars Vardham, et al.: "Finding a Simple Path with Multiple Must-include Nodes", UTDALLAS, Eugene McDermott Library , pages 1-21, XP002716259, Retrieved from the Internet: URL:http://libtreasures.utdallas.edu/xmlui /bitstream/handle/10735.1/2637/ECS-TR-EE-V ardhan-310316.85.pdf?sequence=7 [retrieved on 2013-11-08]
- DOUVILLE R ET AL: "A service plane over the PCE architecture for automatic multidomain connection-oriented services", IEEE COMMUNICATIONS MAGAZINE, IEEE SERVICE CENTER, PISCATAWAY, US, vol. 46, no. 6, 6 June 2008 (2008-06-06), pages 94-102, XP011227791, ISSN: 0163-6804, DOI: 10.1109/MCOM.2008.4539472

## Description

### TECHNICAL FIELD

The disclosure relates to the field of path calculation technology, particularly to a method and a device for calculating K-shortest paths in an optical network.

### BACKGROUND

Path analysis is an important part of optical network analysis, and network analysis comprises optimal path analysis, K-shortest path analysis and optimal traversing path analysis. In Wavelength Division Multiplexing (WDM) optical network, path calculation and wavelength assignment are two sub-problems of Routing and Wavelength Assignment (RWA). The path calculation usually provides K shortest paths for the wavelength assignment, so as to improve the success rate of the wavelength assignment.

At present, most of the K-shortest path algorithms are based on Dijkstra algorithm. When the input condition of an K-shortest path algorithm is necessarily passing through a plurality of links and nodes, a segmented calculation method is adopted usually; then the results of the segmented calculation are assembled to form complete K-shortest paths. When links or nodes are found to be overlapped with those of the path (except the nodes participating in the segmentation) calculated in the last time during the assembling process, the assembling process of the path fails; when all the assembled paths fail during the assembling process, then the current calculation for the K-shortest path fails (stopping the path calculation). Finally the wavelength assignment will be provided with no path and wavelength resources, thus the wavelength assignment fails.

In a segmented calculation, the distance from initial node to first necessarily passed condition or the distance from last necessarily passed condition to end node is calculated firstly according to configuration. As the necessarily passed conditions are given by a connection management module, and a plurality of necessarily passed conditions may be provided and not sorted according to a certain rule, which will result in the distances between the necessarily passed conditions and the initial or end nodes being determined randomly; such distances may be determined according to hop counts or link cost; and such necessarily passed conditions may be understood as necessarily passed nodes or links.

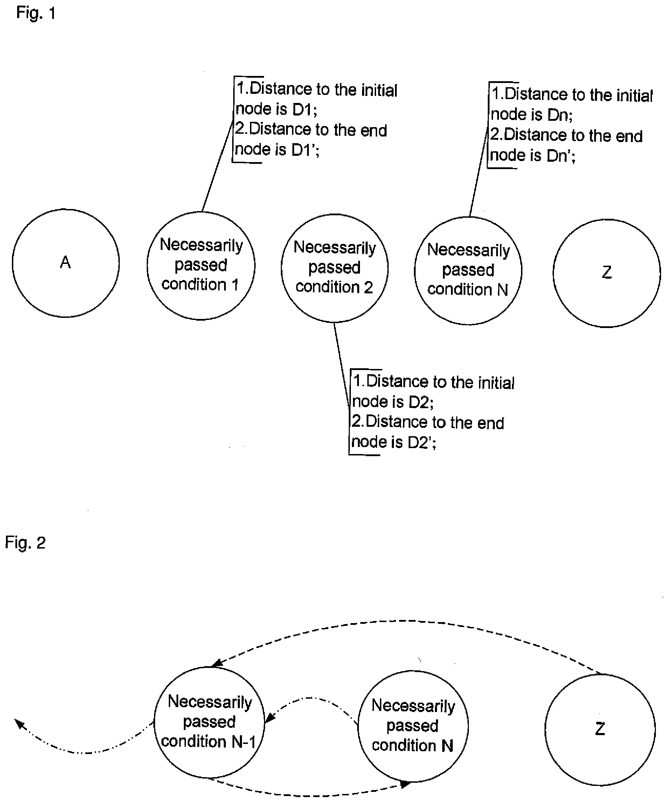

In Fig. 1, wherein node A is an initial node, node Z is an end node; necessarily passed condition 1, necessarily passed condition 2, ... and necessarily passed condition N exist between nodes A and Z. If the distance between necessarily passed condition N and node Z is larger than the distance between necessarily passed condition N-1 and node Z, then a schematic diagram of a path shown in Fig. 2 may be obtained according to the above described algorithm; wherein the path is from the end node Z to necessarily passed condition N-1 firstly, then from necessarily passed condition N-1 to necessarily passed condition N, then from necessarily passed condition N back to necessarily passed condition N-1 and finally from necessarily passed condition N-1 to other necessarily passed conditions. According to the path assembly rule, the path assembly fails when a repeated link or node exists during assembling.

The necessarily passed conditions are not sorted according to a certain rule in the prior art, likely to cause the existence of repeated links and nodes, thereby reducing the success rate of the K-shortest path assembly.

Document http://libtreasures.utdallas.edu/xmlui/bitstream/handlel 10735.1 12637/ECS-TR-EE-Vardhan-31_0316.85.pdf?sequence=7: "Finding a Simple Path with Multiple Must-include Nodes" discloses a heuristic algorithm to find a simple path, between a pair of terminals, which has constraint to pass through a certain set of other nodes. The algorithm is comprised into two main steps: (1) considering a pair of nodes in sequence from source to destination as a segment and then computing candidate paths between each segment, and (2) combining paths, one from each segment, in order to make simple path from source to destination.

Document DOUVILLE R ET AL: "A service plane over the PCE architecture for automatic multidomain connection-oriented services" discloses a service plan over the PCE architecture for the automatic provisioning of inter-AS GMPLS-TE, based on the introduction of a multidomain service plane coupled with the PCE-based architecture.

### SUMMARY

In order to solve the problem above, the disclosure provides a method and a device for calculating K-shortest paths, which effectively improves the K-shortest paths assembly success rate and the reliability of the path calculation.

In order to solve the problem above, the technical solution of the disclosure is realized as follows.

A method for calculating K-shortest paths, wherein the method comprises:
Step A: calculating a shortest path tree of a whole network topological graph of Traffic Engineering (TE) links in current optical network;
Step B: sorting, on the calculated shortest path tree, necessarily passed links or nodes in an optical path to be built; and
Step C: executing segmented calculation according to the sorted necessarily passed links and nodes, and assembling K-shortest paths with paths obtained by the segmented calculation.

The Step A may specifically comprise:
calculating the shortest path tree of the whole network topological graph of the TE links in the current optical network by taking an end node of the optical path to be built as a root.

The step of calculating the shortest path tree of the whole network topological graph of the TE links in the current optical network may specifically comprise:
calculating the shortest path tree of the whole network topological graph of the TE links in the current optical network by using a Shortest Path First (SPF) algorithm.

In Step B, the step of sorting the necessarily passed links or nodes in the optical path to be built may be as follows:
sorting based on distance between the necessarily passed links or nodes and the end node of the optical path to be built, or
sorting base on distance between the necessarily passed nodes and the initial node of the optical path to be built.

Before the Step A the method may further comprise:
generating the whole network topological graph of all the TE links in the current optical network; and
trimming the whole network topological graph of the TE links according to a preset limiting condition.

Before executing the Step B the method may further comprise:
determining whether an initial node, the end node and the necessarily passed nodes in the optical path to be built are all on the shortest path tree; when all the nodes are on the shortest path tree, executing the Step B; otherwise, returning that K-shortest path calculation failure.

After executing the Step C the method may further comprise:
determining whether the assembly of the K-shortest path fails; when the assembly fails, returning that the K-shortest path calculation failure; otherwise, returning to execute Step C.

Before returning back to the Step C the method may further comprise:
determining whether the segmented calculation is completed; when the segmented calculation is not completed, returning back to Step C; otherwise, calculating exclude weight value of each path in the K-shortest path, then sorting the paths in the K-shortest paths according to the calculated exclude weight values.

A device for calculating K-shortest paths, wherein the device comprises:
a shortest path tree generation module, which is configured to calculate a shortest path tree of a whole network topological graph of TE links in current optical network;
a necessarily passed condition sorting module, which is configured to sort, on the calculated shortest path tree, necessarily passed links and nodes in an optical path to be built; and
a path assembling module, which is configured to execute segmented calculation according to the sorted necessarily passed links or nodes, and assembling K-shortest path with the paths obtained by the segmented calculation;

The necessarily passed condition sorting module is further configured to sort necessarily passed links and nodes in an optical path to be built based on distance between the necessarily passed links or nodes and the end node of the optical path to be built, or base on distance between the necessarily passed nodes and the initial node of the optical path to be built.

The calculation device may further comprise:
a topological graph generation module, which is configured to generate the whole network topological graph of all the TE links in the current optical network; and
a topological graph trimming module, which is configured to trim the whole network topological graph of the TE links according to a preset limiting condition.

At least one technology in above technical program has the advantages of effectively avoiding the rate of path assembly failure caused by randomness of nodes and links necessarily to be passed through ordering nodes and links necessarily to be passed on calculated shortest path tree; speeding up quick determination of path accessibility through judging whether the initial node and the end node are on shortest path tree; effectively improving the K-shortest path assembly success rate and is beneficial to improve path calculation reliability; and effectively eliminating the links and nodes passed through by network fault and improving the optical network reliability through sorting loose exclude condition of necessarily passed links and nodes.

### BRIEF DESCRIPTION OF THE DRAWINGS

Fig. 1 shows a schematic diagram of the necessarily passed conditions between the initial node and the end node in the prior art;
Fig. 2 shows a schematic diagram of the K-shortest path calculated through the prior art;
Fig. 3 shows a flowchart of a method for calculating K-shortest paths in this embodiment;
Fig. 4 shows a typical network in this embodiment;
Fig. 5 shows a shortest path tree calculated based on the typical networking in Fig. 4;
Fig. 6 shows a structural diagram of a device for calculating K-shortest paths in this embodiment.

### DETAILED DESCRIPTION

In order to clear the object, technical solution and advantages of the embodiment of the disclosure, the embodiments of the disclosure will be described below with reference to the drawings and embodiments in detail. And the drawings and embodiments of the disclosure are only used for explaining the disclosure, not intended to limit it.

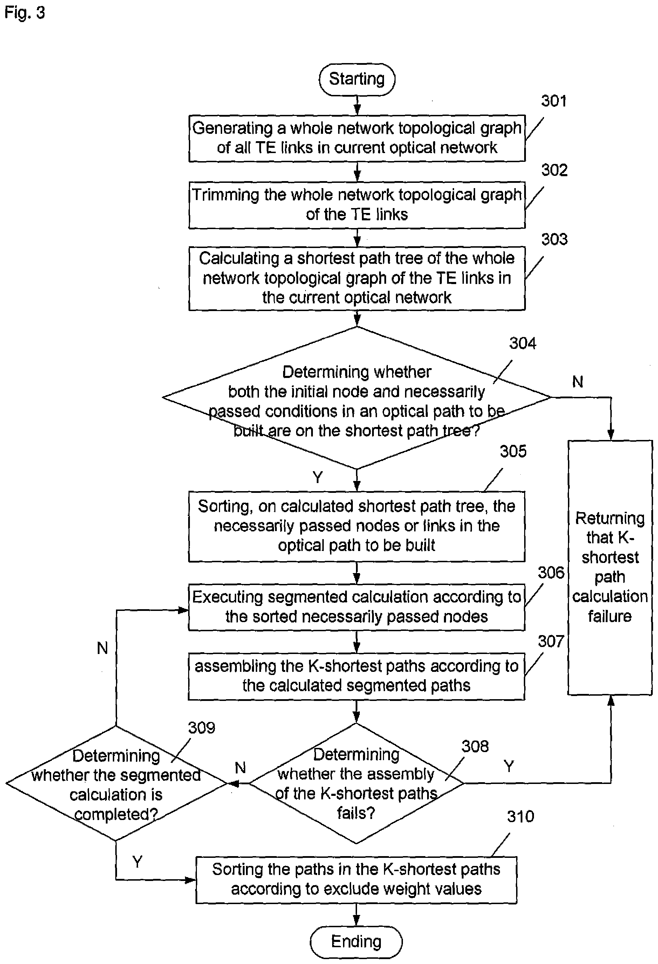

Fig. 3 shows a flowchart of a method for calculating K-shortest paths in the current embodiment. Specific steps are as follows:
Step 301: generating a whole network topological graph of all TE links in current optical network;
   the whole network topological graph of the TE links is obtained from a path protocol (Open Shortest Path First (OSPF) or Intermediate System to Intermediate System (ISIS)) TE expand flooding information, and stored in a TE Database (TED).
Step 302: trimming the whole network topological graph of the TE links, then executing Step 303.

That is, the whole network topological graph of the TE links is trimmed according to a preset limiting condition. The limiting condition comprises an avoiding limiting condition and an unilateral limiting condition, wherein
1) the avoiding limiting condition refers to an avoiding node needed to be excluded during the K-shortest path calculation process; wherein the avoiding node is a node necessarily to be avoided in the shortest path satisfying a user constraint condition.
2) the unilateral limiting condition refers to unilateral TE links in the whole network topological graph except the TE links.

After trimming the whole network topological graph of the TE links by using the avoiding limiting condition, because an unilateral TE link may exist between two nodes, as for bidirectional communication service, the unilateral TE link cannot participate in K path calculation; thus, the whole network topological graph of the TE links can be trimmed through the unilateral limiting condition, excluding the unilateral TE link in the whole network topological graph of the TE links. The limiting conditions can be preset by a network administrator.

Step 303: calculating the shortest path tree of the whole network topological graph of the TE links in current optical network, then executing Step 304.

In this embodiment, by taking the end node of optical path to be built as a root, the shortest path tree of the whole network topological graph of the TE links can be calculated through the SPF algorithm; wherein the SPF algorithm is a basic algorithm of OSPF path calculation. The whole network topological graph of the TE links and end node (node Z) of the optical path to be built are input firstly in calculation, and the calculation result is as follows: a tree taking node Z as the root, wherein the tree represents a set of nodes and links. Certainly, the shortest path tree can be calculated through other algorithms, and the embodiment does not intend to limit the specific manner of adopted algorithm.

Step 304: determining whether the initial node, end node and necessarily passed nodes in the optical path to be built are on the shortest path tree; when such nodes are on the shortest path tree, executing Step 305; otherwise, returning that K-shortest path calculation failure.

The shortest path tree calculated in Step 303 can represent the set of a series of links and nodes, and the set forms the shortest path tree. In this step, just inquiring whether the initial node, end node and necessarily passed nodes (the necessarily passed links can be transferred into two necessarily passed nodes) are in the set, so as to determine whether the initial node, end node and necessarily passed node are on the shortest path tree; when such nodes are all in the set, executing Step 305; otherwise, returning that the K-shortest path calculation failure.

The necessarily passed node mentioned above refers to a node which necessarily to be passed through in the shortest path satisfying user constraint condition.

There are two reasons for that the initial node and the end node are not on the shortest path tree in the embodiment:
1) two or more unconnected topological graphs exist, then the initial node and end node are on different topological graphs respectively;
2) the calculation object of the SPF algorithm is a bidirectional graph (side is bidirectional, or called as an undirected graph), so before the SPF algorithm, revising the original topological graph of the TE links to remove the unilateral TE link; so that the initial node and end node may be in different topological graphs, or the node may be isolated node (without any side of the TE link) and existing in no topological graph.

The initial node or end node are determined to be not on the shortest path tree when the above two situations happen, but not limited to the two situations. By determining whether the initial node and the end node are on the shortest path tree, the determination speed of path accessibility (an unconnected graph) is improved effectively.

Step 305: sorting, on the calculated shortest path tree, the necessarily passed links or nodes in the optical path to be built.

For example, sorting the necessarily passed nodes according to a preset sorting strategy. Wherein the sorting strategy can sort according to the distance from the necessarily passed nodes to the end node of the optical path to be built, or sort according to the distance from the necessarily passed nodes to the initial node of the optical path to be built. By sorting the necessarily passed nodes according to the shortest path tree, segmented path calculation can be applied to the sorted result, and can effectively avoids repeated links or nodes existing in path, thereby improving the K-shortest path assembly efficiency.

Step 306: executing segmented path calculation according to the sorted necessarily passed nodes, then executing Step 307.

In this step, K-shortest calculation algorithm can be called to calculate the path in segmentation. In order to obtain the K-shortest paths, the constraint condition of the K-shortest algorithm comprises information of all the other necessarily passed nodes as performing each segmented calculation, thereby ensuring that repeated nodes and links do not exist in the calculated result.

Step 307: assembling the K-shortest paths according to the calculated segmented path, then executing Step 308.

The assembly of the calculated segmented paths can be performed in an existing path assembling manner, and the number of all the current successfully assembled paths is recorded.

Step 308: determining whether the assembly of the K-shortest paths fails; when the assembly fails, returning that the K-shortest path calculation failure; otherwise, executing Step 309.

In this step, determining whether the assembly of the K-shortest paths fails through determining whether repeated links exist; when the repeated links exist, then the path assembly fails. Of course, also can determine whether the assembly of K-shortest paths fails through determining whether repeated nodes exist; when the repeated nodes exist, then the path assembly fails.

Step 309: determining whether the segmented calculation is completed; when the segmented calculation is completed, executing Step 310; otherwise, returning back to Step 306.

That is to repeat Steps 306-308 until the segmented calculation and assembly are completed.

Because the final assembled paths calculated through the segmented calculation may be not sorted according to the minimum hop counts or minimum link cost, thus it could be determined whether a secondary sorting is needed according to the number of the current paths assembled successfully. When the number is 1, returning that the K-shortest path calculation failure; when the number is more than 1, applying a secondary sorting to the necessarily passed nodes or links.

The minimum hop counts mean that the desired calculated path passes through the least number of the nodes in the possibly existed paths.

The cost of the minimum link cost refers to the attribute of the TE links. The cost has relations with the bandwidth; the larger the bandwidth is, the smaller the TE link cost is. When calculating the path, it expects to obtain a path which passes through links with the minimum sum of the cost, which means to pass a path with large bandwidth.

Step 310: sorting the paths in the K-shortest paths according to exclude weight values.

That is, the paths in the K-shortest paths are sorted according to the minimum hop counts or minimum link cost firstly; then the exclude weight value of each path in the K-shortest paths is calculated according to a preset excluding strategy; then the paths in the K-shortest paths are resorted according to the exclude weight values. The exclude weight value can be understood as fault probability of links or nodes, but not limited to it.

The preset excluding strategy may be a loose exclude condition, which specifically means that: when the K-shortest paths are obtained, a group of the exclude weight values are obtained with a certain weighting coefficient (the exclude weight value of the link is large, the exclude weight value of the node is small) according to the times of the loose excluded links and nodes appear in the paths; then the paths are sorted in order according to the exclude weight values; thus the paths with the exclude weight values are used preferentially, thereby avoiding failed links easily.

The link fault probability in an actual network is far more higher than that of the node; thus a path avoiding links is selected preferentially, which means the link exclude weight value is far more larger than the node exclude weight value. This is because that if both the links and the nodes are needed to be avoided in the path calculation, it is needed to decide which are selected first and which are selected later. In this embodiment, the links are selected to be avoided firstly, because the link fault probability is far more larger than that of the node. The exclude weight value of each node or link can be set according to actual situation.

The calculated K-shortest path can be used in wavelength assignment after the calculation of Steps 301-310.

Based on the above technical solution, the manner of sorting the necessarily passed links or nodes on the calculated shortest path tree effectively avoids the path assembly failure probability, which is caused by the randomness of the necessarily passed links or nodes, further speeds up quick determination of path accessibility, effectively improves the path assembly success rate and is beneficial to improve path calculation reliability. The manner of sorting the loose exclude conditions effectively is beneficial to exclude the links and nodes passed through by the network fault and effectively improve the reliability of optical network.

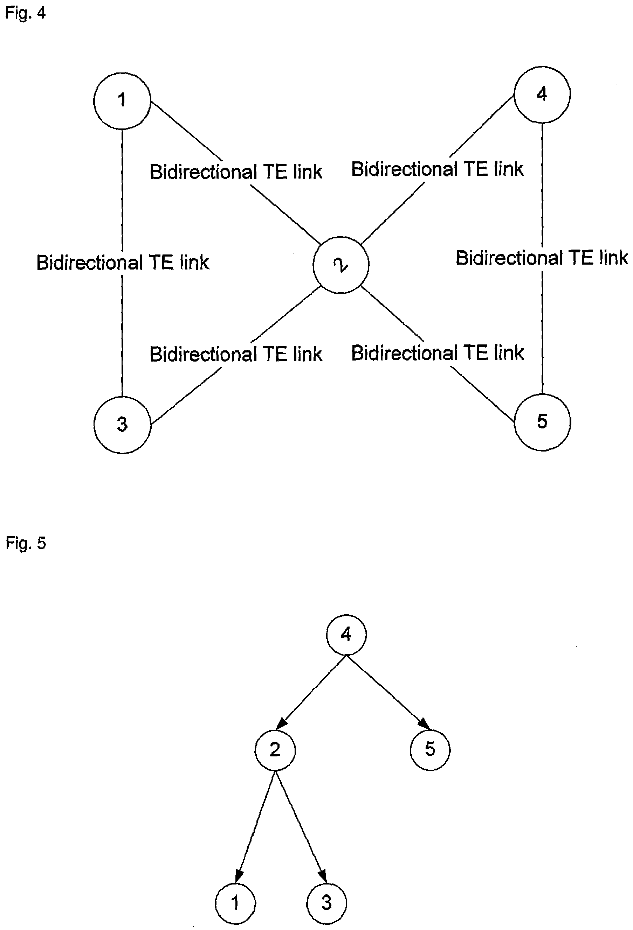

In order to describe the processing conditions of the embodiment in detail, a typical network is tested below. The topological graph of the test sample is shown in Fig. 4, wherein the costs of all the TE links are the same, and the costs referring to the available bandwidth capacity of the optical fiber between the nodes.
Step 1: constructing a network, configuring internal optical fiber connection and configuring transmission interface optical fiber connection; for convenience, this test sample configuring no unilateral side, each node is in full configuration, no unconnected graph is generated, and each node is started respectively.
Step 2: establishing service from node 1 to node 4 and the constraint condition is that node 5 and node 3 must be passed through; then node 5 and node 3 are called necessarily passed node 5 and necessarily passed node 3 respectively.

That is, when an optical path from node 1 to node 4 is to be established, node 1 is node A (i.e. the initial node), similarly, node 4 is node Z (i.e. the end node), and node 5 and node 3 are necessarily passed nodes.

Step 3: obtaining a shortest path tree as shown in Fig. 5 by calling SPF algorithm.

Step 4: examining whether all the necessarily passed nodes are on the shortest path tree, which means that node 5 and node 3 are on the shortest path tree; sorting the necessarily passed nodes, and finding node 5 is closest to node Z (node 4) and node 3 is the secondary one.

Step 5: calculating K-shortest paths in segmentation.

Namely, calculating from node 5 to node Z (excluding node 3 and node A) to obtain K-shortest paths: 5-4 and 5-2-4;
furthermore, calculating from node 3 to node 5 (excluding node Z and node A) to obtain a K-shortest path: 3-2-5;
assembling paths to obtain a K-shortest path: 3-2-5-4; then the formerly calculated K-shortest path 5-2-4 is invalid (there is overlapped node 2);
then continuing to calculate from node A to node 3 (excluding node 5 and node Z) to obtain a K-shortest path: 1-3;
assembling paths to obtain a K-shortest path: 1-3-2-5-4; then K-shortest path calculation is completed.
it can be seen from the embodiment that, by using the shortest path tree, it can be determined at early stage of the K-shortest path calculation whether a path between the initial node A and end node Z can be calculated. As for a large network, such K-shortest path algorithm is beneficial to improve the path assembly success rate of a path inquiry request with several necessarily passed conditions; and the loose exclude algorithm is beneficial to exclude fault links and nodes, thereby improving the path protection probability of optical network.

In order to realize above method embodiments, other embodiments of the disclosure also provide a device for calculating the K-shortest paths. In addition, what is needed to be described firstly is that the following embodiments are used for realizing the above method embodiment, so that the modules in the device are set for realizing the steps of the above method; but, the disclosure is not limited to the following embodiments, any devices and modules capable of realizing the method shall fall within the protection scope of the disclosure. In the following description, the content same to the method is omitted in order to save the length of this specification.

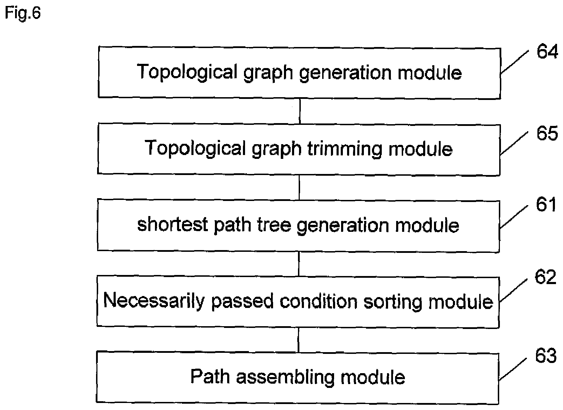

Fig. 6 shows a structural diagram of a device for calculating K-shortest paths in this embodiment. Based on the figure, the calculation device comprises:
a shortest path tree generation module 61, which is configured to calculate a shortest path tree of a whole network topological graph of TE links in current optical network;
a necessarily passed condition sorting module 62, which is configured to sort, on calculated shortest path tree, necessarily passed links and nodes in an optical path to be built;
a path assembling module 63, which is configured to execute segmented calculation and path assembly according to the sorted necessarily passed links or nodes.

In another embodiment of the disclosure, the calculation device further comprises:
a topological graph generation module 64, which is configured to generate a whole network topological graph of all TE links in current optical network;
a topological graph trimming module 65, which is configured to trim the whole network topological graph of the TE links according to a preset limiting condition.

The above is only the preferred embodiments of the disclosure. It should be noted that, for those skilled in the art, several improvements and modifications can be done without separating from the principle of the disclosure, such improvements and modifications shall also fall within the protection scope of the disclosure.

## Claims

1. A method for calculating K-shortest paths, comprising:
Step A: calculating a shortest path tree of a whole network topological graph of Traffic Engineering (TE) links in current optical network by taking an end node of the optical path to be built as a root;
Step B: sorting, on the calculated shortest path tree, necessarily passed links or nodes in an optical path to be built; and
Step C: executing segmented calculation according to the sorted necessarily passed links and nodes, and assembling K-shortest paths with paths obtained by the segmented calculation;
**characterized in that** wherein, in Step B, the step of sorting the necessarily passed links or nodes in the optical path to be built is as follows:
sorting based on distance between the necessarily passed links or nodes and the end node of the optical path to be built, or
sorting base on distance between the necessarily passed nodes and the initial node of the optical path to be built.

2. The calculation method according to claim 1, wherein the step of calculating the shortest path tree of the whole network topological graph of the TE links in the current optical network specifically comprises:
calculating the shortest path tree of the whole network topological graph of the TE links in the current optical network by using a Shortest Path First (SPF) algorithm.

3. The calculation method according to any one of claims 1-2, before the Step A the method further comprising:
generating the whole network topological graph of all the TE links in the current optical network; and
trimming the whole network topological graph of the TE links according to a preset limiting condition.

4. The calculation method according to any one of claims 1-2, before executing the Step B the method further comprising:
determining whether an initial node, the end node and the necessarily passed nodes in the optical path to be built are all on the shortest path tree; when all the nodes are on the shortest path tree, executing the Step B; otherwise, returning that K-shortest path calculation failure.

5. The calculation method according to any one of claims 1-2, after executing the Step C the method further comprising:
determining whether the assembly of the K-shortest path fails; when the assembly fails, returning that the K-shortest path calculation failure; otherwise, returning to execute Step C.

6. The calculation method according to claim 5, before returning back to the Step C the method further comprising:
determining whether the segmented calculation is completed; when the segmented calculation is not completed, returning back to Step C; otherwise, calculating exclude weight value of each path in the K-shortest path, then sorting the paths in the K-shortest paths according to the calculated exclude weight values.

7. A device for calculating K-shortest paths, comprising:
a shortest path tree generation module, which is configured to calculate a shortest path tree of a whole network topological graph of TE links in current optical network by taking an end node of the optical path to be built as a root;
a necessarily passed condition sorting module, which is configured to sort, on the calculated shortest path tree, necessarily passed links and nodes in an optical path to be built; and
a path assembling module, which is configured to execute segmented calculation according to the sorted necessarily passed links or nodes, and assembling K-shortest path with the paths obtained by the segmented calculation;
**characterized in that** the necessarily passed condition sorting module is configured to sort necessarily passed links and nodes in an optical path to be built based on distance between the necessarily passed links or nodes and the end node of the optical path to be built, or base on distance between the necessarily passed nodes and the initial node of the optical path to be built.

8. The calculation device according to claim 7, further comprising:
a topological graph generation module, which is configured to generate the whole network topological graph of all the TE links in the current optical network; and
a topological graph trimming module, which is configured to trim the whole network topological graph of the TE links according to a preset limiting condition.

## Patentansprüche

1. Verfahren zur Berechnung K-kürzester Pfade, umfassend die folgenden Schritte:
Schritt A: Berechnen eines kürzesten Pfadbaumes eines ganzen Netzes topologischer Graphen von technischen Links (TE) in einem aktuellen optischen Netz dadurch, daß ein Endknoten des zu bauenden optischen Pfades als Wurzel genommen wird;
Schritt B: Sortieren auf der Grundlage des berechneten kürzesten Pfadbaumes notwendigerweisender passierte Links oder Knoten in einem zu bauenden optischen Pfad; und
Schritt C: Ausführen einer segmentierten Berechnung gemäß den sortierten, notwendigerweise passierten Links und Knoten, und Zusammenbauen der K-kürzesten Pfade mit Pfaden, die durch die abschnittsweise Berechnung erhalten werden,
**dadurch gekennzeichnet, daß** in Stufe B der Schritt des Sortierens der notwendigerweise passierten Links oder Knoten in dem zu bauenden optischen Pfad der folgende ist: Sortieren basierend auf der Entfernung zwischen den notwendigerweise passierten Links oder Knoten und dem Endknoten des zu bauenden optischen Pfades, oder Sortieren basierend auf der Entfernung zwischen den notwendigerweise passierten Knoten und dem Anfangsknoten des zu bauenden optischen Pfades.

2. Berechnungsverfahren nach Anspruch 1, **dadurch gekennzeichnet, daß** der Schritt des Berechnens des kürzesten Pfadbaumes des gesamten Netzes topologischer grafischer Darstellung der TE-Links in dem aktuellen optischen Netz insbesondere umfaßt: Berechnen des kürzesten Pfadbaumes des gesamten Netzes topologischer grafischer Darstellung der TE-Links in dem gegenwärtigen optischen Netz unter Verwendung eines Shortes Path First (SPF) Algorithmus.

3. Berechnungsverfahren nach irgendeinem der Ansprüche 1 - 2, **dadurch gekennzeichnet, daß** vor dem Schritt A das Verfahren ferner umfaßt:
Erzeugen des gesamten Netzes topologischer Graphen aller TE-Links in dem aktuellen optischen Netz, und Beschneiden des gesamten Netzes topologischer Graphen der TE-Links gemäß einer vorgegebenen Begrenzungsbedingung.

4. Berechnungsverfahren nach einem der Ansprüche 1 - 2, **dadurch gekennzeichnet, daß** vor der Ausführung des Schrittes B das Verfahren ferner umfaßt: Bestimmen, ob ein Anfangsknoten, der Endknoten und die notwendigerweise passierten Knoten sich alle auf dem kürzesten Pfadbaum befinden, und wenn sich alle Knoten auf dem kürzesten Pfadbaum befinden, Durchführen des Schrittes B, anderenfalls Rückschluß auf ein Versagen der Berechnung des K-kürzesten Pfades.

5. Berechnungsverfahren nach einem der Ansprüche 1 - 2, **dadurch gekennzeichnet, daß** nach der Ausführung des Schrittes C das Verfahren ferner umfaßt: Bestimmen, ob der Einbau des K-kürzesten Pfades versagt, und wenn der Einbau versagt, Rückschluß auf ein Versagen der Berechnung des K-kürzesten Pfades, anderenfalls Rückkehr zur Ausführung des Schrittes C.

6. Berechnungsverfahren nach Anspruch 5, **dadurch gekennzeichnet, daß** vor der Rückkehr zum Schritt C das Verfahren ferner umfaßt: Bestimmen, ob die segmentierte Berechnung vollständig ist, und wenn die segmentierte Berechnung nicht vollständig ist, so Rückkehr zum Schritt C, anderenfalls Berechnung unter Ausschluß des Gewichtswertes jedes Pfades in dem K-kürzesten Pfad und darauf erfolgendes Sortieren der Pfade in K-kürzeste Pfade gemäß den berechneten Gewichtswerten.

7. Vorrichtung zur Berechnung von K-kürzesten Pfaden, umfassend einen Erzeugungsmodul für einen kürzesten Pfadbaum, der gebaut ist, um einen kürzesten Pfadbaum eines gesamten Netzes topologischer Graphen von technischen Links in einem aktuellen optischen Netz zu berechnen, und zwar dadurch, daß ein Endknoten des zu bauenden optischen Pfades als Wurzel genommen wird; ferner umfassend einen Sortiermodul für einen notwendigerweise passierten Zustand, der gebaut ist, um auf dem berechneten kürzesten Pfadbaum zu sortieren, sowie umfassend einen Zusammenbaumodul für den Pfad, der gebaut ist, um eine segmentierte Berechnung gemäß den sortierten, notwendigerweise passierten Links oder Knoten auszuführen; sowie zum Zusammenbau eines K-kürzesten Pfades mit Pfaden, die durch die segmentierte Berechnung erhalten werden, **dadurch gekennzeichnet, daß** der Sortiermodul für einen notwendigerweise passierten Zustand so ausgebildet ist, daß er notwendigerweise passierte Links und Knoten in einem zu bauenden optischen Pfad sortiert, und zwar auf der Basis des Abstandes zwischen den notwendigerweise passierten Links oder Knoten und dem Endknoten des zu bauenden optischen Pfades oder auf der Basis des Abstandes zwischen den notwendigerweise passierten Knoten und dem anfänglichen Knoten des zu bauenden optischen Pfades.

8. Berechnungsvorrichtung zur nach Anspruch 7, ferner **gekennzeichnet durch** einen einen topologischen Graph erzeugenden Modul, der so ausgebildet ist, daß er das ganze Netz topologischer Graphen aller technischer Links in dem gegenwärtigen optischen Netz erzeugt, sowie **durch** einen topologischen Graphen-Beschneidungsmodul, der so ausgebildet ist, daß das gesamte Netz topologischer Graphen der TE-Links gemäß einer vorgegebenen Begrenzungsbedingung beschnitten wird.

## Revendications

1. Procédé de calcul des K trajets les plus courts, comprenant :
étape A : calculer un arbre des trajets les plus courts d'un graphe topologique de réseau entier de liaisons d'ingénierie du trafic (TE) dans un réseau optique actuel en prenant comme base un noeud d'extrémité du trajet optique à construire ;
étape B : trier, sur l'arbre calculé des trajets les plus courts, les liaisons ou noeuds nécessairement traversés dans un trajet optique à construire ; et
étape C : exécuter un calcul segmenté selon les liaisons et noeuds nécessairement traversés triés, et assembler les K trajets les plus courts avec des trajets obtenus par le calcul segmenté ;
**caractérisé par le fait que**, dans l'étape B, l'étape de tri des liaisons ou noeuds nécessairement traversés dans le trajet optique à construire est comme suit :
trier sur la base d'une distance entre les liaisons ou noeuds nécessairement traversés et le noeud d'extrémité du trajet optique à construire, ou
trier sur la base d'une distance entre les noeuds nécessairement traversés et le noeud initial du trajet optique à construire.

2. Procédé de calcul selon la revendication 1, dans lequel l'étape de calcul de l'arbre des trajets les plus courts du graphe topologique de réseau entier des liaisons TE dans le réseau optique actuel comprend spécifiquement :
calculer l'arbre des trajets les plus courts du graphe topologique de réseau entier des liaisons TE dans le réseau optique actuel en utilisant un algorithme de trajet le plus court en premier (SPF).

3. Procédé de calcul selon l'une quelconque des revendications 1 et 2, avant l'étape A le procédé comprenant en outre :
générer le graphe topologique de réseau entier de toutes les liaisons TE dans le réseau optique actuel ; et
découper le graphe topologique de réseau entier des liaisons TE selon une condition de limitation prédéfinie.

4. Procédé de calcul selon l'une quelconque des revendications 1 et 2, avant l'exécution de l'étape B le procédé comprenant en outre :
déterminer si un noeud initial, le noeud d'extrémité et les noeuds nécessairement traversés dans le trajet optique à construire sont tous sur l'arbre des trajets les plus courts ; lorsque tous les noeuds sont sur l'arbre des trajets les plus courts, exécuter l'étape B ; sinon, rapporter l'échec de calcul des K trajets les plus court.

5. Procédé de calcul selon l'une quelconque des revendications 1 et 2, après l'exécution de l'étape C le procédé comprenant en outre :
déterminer si l'assemblage des K trajets les plus courts a échoué ; lorsque l'assemblage a échoué, rapporter l'échec de calcul des K trajets les plus courts ; sinon, retourner à l'étape C.

6. Procédé de calcul selon la revendication 5, avant de retourner à l'étape C le procédé comprenant en outre :
déterminer si le calcul segmenté est terminé ; lorsque le calcul segmenté n'est pas terminé, retourner à l'étape C ; sinon, calculer une valeur de pondération d'exclusion de chaque trajet dans les K trajets les plus courts, puis trier les trajets dans les K trajets les plus courts selon les valeurs de pondération d'exclusion calculées.

7. Dispositif de calcul des K trajets les plus courts, comprenant :
un module de génération d'arbre des trajets les plus courts, qui est configuré pour calculer un arbre des trajets les plus courts d'un graphe topologique de réseau entier de liaisons TE dans un réseau optique actuel en prenant comme base un noeud d'extrémité du trajet optique à construire ;
un module de tri avec condition nécessairement traversé, qui est configuré pour trier, sur l'arbre calculé des trajets les plus courts, les liaisons et noeuds nécessairement traversés dans un trajet optique à construire ; et
un module d'assemblage de trajets, qui est configuré pour exécuter un calcul segmenté selon les liaisons ou noeuds nécessairement traversés triés, et assemblant les K trajet les plus courts avec les trajets obtenus par le calcul segmenté ;
**caractérisé par le fait que** le module de tri avec condition nécessairement traversé est configuré pour trier les liaisons et noeuds nécessairement traversés dans un trajet optique à construire sur la base d'une distance entre les liaisons ou noeuds nécessairement traversés et le noeud d'extrémité du trajet optique à construire, ou sur la base d'une distance entre les noeuds nécessairement traversés et le noeud initial du trajet optique à construire.

8. Dispositif de calcul selon la revendication 7, comprenant en outre :
un module de génération de graphe topologique, qui est configuré pour générer le graphe topologique de réseau entier de toutes les liaisons TE dans le réseau optique actuel ; et
un module de découpage de graphe topologique, qui est configuré pour découper le graphe topologique de réseau entier des liaisons TE selon une condition de limitation prédéfinie.
